# EUROPÄISCHE PATENTSCHRIFT

(11) **EP 3 921 211 B1**
(45) Veröffentlichungstag und Bekanntmachung des Hinweises auf die Patenterteilung: **29.03.2023**
(21) Anmeldenummer: 20710051.2
(22) Anmeldetag: 20.02.2020
(51) Int. Cl.: B60T 8/88, B60T 17/22

(54) **ÜBERWACHUNG EINER BREMSKRAFT EINES FAHRZEUGS**
MONITORING A BRAKING FORCE OF A VEHICLE
SURVEILLANCE D'UNE FORCE DE FREINAGE D'UN VÉHICULE

(30) Priorität: 22.02.2019 CN 201910131820
(43) Veröffentlichungstag der Anmeldung: 15.12.2021
(73) Patentinhaber: Siemens Mobility GmbH, 81739 München (DE); Siemens Mobility Technologies (Beijing) Co., Ltd., Beijing (CN)
(72) Erfinder: GONG, Lv Gang, Guangdong 511400 (CN); YAN, Wei, 91058 Erlangen (DE)
(74) Vertreter: Siemens Patent Attorneys
(86) Internationale Anmeldenummer: PCT/EP2020/054486
(87) Internationale Veröffentlichungsnummer: WO 2020/169737

(56) Entgegenhaltungen:
- EP-A2- 2 769 866
- DE-A1-102011 078 664
- DE-A1-102014 119 329
- US-A1- 2006 043 790
- US-A1- 2014 324 283

## Beschreibung

Die Erfindung betrifft ein Verfahren zum Betreiben eines Fahrzeugs und ein Fahrzeug, insbesondere mit einer Federspeicherbremse.

Fahrzeuge mit Federspeicherbremsen sind hinlänglich bekannt. So finden Federspeicherbremsen bei Lastkraftwagen und Omnibussen, insbesondere aber in Schienenfahrzeugen Verwendung. Federspeicherbremsen gelten als ausfallsichere Bremse, da die Bremskraft mittels vorgespannter Federn aufgebracht wird. Um die Bremse zu lösen und offen zu halten muss entsprechend eine der Federkraft entgegenwirkende Kraft aufgebracht werden, meist in pneumatischer oder hydraulischer Form. Bei Ausfall dieses Betätigungssystems, beispielsweise bei einer Leckage im Druckluftsystem, legt sich die Bremse automatisch an und bleibt anschließend geschlossen.

Ein Bremssteuergerät ermittelt den anliegenden Druck im Betätigungssystem. Eine Anzeige an den Fahrer erfolgt bei nicht ausreichendem Druck. Im Fehlerfall kann es jedoch auch bei gemeldetem, ausreichendem Druck zu einer geschlossenen Bremse führen. Wird dann gegen die angelegte Bremse gefahren, kann es zu schweren Beschädigungen am Fahrzeug kommen. Druckschrift DE 10 2011 078 664 A1 offenbart ein Verfahren zur Überprüfung einer Fahrzeug-Bremsanlage, wobei bei einer Abweichung zwischen einer vorgegebenen Beschleunigung und einer gemessenen tatsächlichen Beschleunigung bei nicht betätigter Bremsanlage auf das unbeabsichtigte Wirken einer Bremse der Bremsanlage geschlossen wird.

EP 2 769 866 A2 offenbart ein Fahrerassistenzsystem für die Beschleunigung eines Fahrzeugs mittels eines Fahrpedals mit einer Steuereinrichtung, der eine Ist-Geschwindigkeit zugeführt und der eine Soll-Geschwindigkeit vorgegeben wird und die aufgrund von Fahrparametern und/oder Fahrzeugparametern eine optimierte, effiziente Beschleunigung ermittelt und vorgibt.

Der Erfindung liegt die Aufgabe zugrunde, eine angelegte Bremse einfach und sicher zu erkennen.

Gelöst wird die Aufgabe durch die Gegenstände der unabhängigen Patentansprüche 1 und 9. Weiterbildungen und Ausgestaltungen der Erfindung finden sich in den Merkmalen der abhängigen Patentansprüche wieder.

Ein erfindungsgemäßes Verfahren zum Betreiben eines Fahrzeugs, insbesondere mit einer ausfallsicheren Bremse, insbesondere einer Bremse nach dem Federspeicherprinzip, umfasst folgende Verfahrensschritte:
- Erfassen einer Stellung eines Steuerungselements zur Regelung der Antriebsleistung,
- Vorgeben eines Beschleunigungswerts in Abhängigkeit der erfassten Stellung des Steuerungselements zur Regelung der Antriebsleistung,
- Erfassen eines momentanen Beschleunigungswerts des Fahrzeugs;
- Vergleichen des erfassten Beschleunigungswerts mit dem vorgegebenen Beschleunigungswert,
- Schließen auf eine unbekannte Bremskraft bei Feststellung einer Abweichung des erfassten Beschleunigungswerts vom vorgegebenen Beschleunigungswert um zumindest ein vorgegebenes Maß,
- Ausgeben eines Signals über eine unbekannte Bremskraft an den Fahrer des Fahrzeugs.

Ein erfindungsgemäßes Fahrzeug, insbesondere ein spurgebundenes Fahrzeug, insbesondere ein Schienenfahrzeug, insbesondere ein Schienenfahrzeug des Personenverkehrs, umfasst wenigstens eine, insbesondere ausfallsichere, Bremse, insbesondere eine Federspeicherbremse, sowie zumindest eine Fahrzeugsteuerung, beispielsweise in Form eines Microcomputers oder einer anderen Art von Rechner. Die Fahrzeugsteuerung ist erfindungsgemäß eingerichtet zum Ausführen des Verfahrens. Das Fahrzeug weist die Messwertaufnehmer zur Erfassung der Stellung des Steuerungselements zur Regelung der Antriebsleistung und zur Erfassung eines momentanen Beschleunigungswerts des Fahrzeugs auf. Letztere Messwertaufnehmer können auch ausgebildet sein zur Erfassung einer Geschwindigkeit. Die Fahrzeugsteuerung ist dann ausgebildet zur Ermittlung des Werts der momentanen Beschleunigung aus den erfassten Geschwindigkeitswerten. Erfindungsgemäß ist die Fahrzeugsteuerung ausgebildet und eingerichtet
- zur Vorgabe eines Beschleunigungswerts in Abhängigkeit der erfassten Stellung des Steuerungselements zur Regelung der Antriebsleistung, und
- zum Vergleich des erfassten Beschleunigungswerts mit dem vorgegebenen Beschleunigungswert, wobei auf eine unbekannte Bremskraft bei Feststellung einer Abweichung des erfassten Beschleunigungswerts vom vorgegebenen Beschleunigungswert um zumindest ein vorgegebenes Maß geschlossen wird, sowie
- zur Ausgabe eines Signals über eine unbekannte Bremskraft an den Fahrer des Fahrzeugs.

Bei der ausfallsicheren Bremse handelt es sich insbesondere um eine mechanische Bremse, insbesondere um eine Federspeicherbremse. Das Verfahren ist dann geeignet zum Erkennen einer angelegten Federspeicherbremse und somit geeignet zur Überwachung der Funktion der Federspeicherbremse.

Weist das Fahrzeug eine ausfallsichere Bremse auf wird gemäß einer Weiterbildung der Erfindung bei Feststellung einer Abweichung des erfassten Beschleunigungswerts vom vorgegebenen Beschleunigungswert um zumindest das vorgegebene Maß auf eine angelegte, ausfallsichere Bremse geschlossen und dem Fahrer des Fahrzeugs wird ein Signal über eine angelegte, ausfallsichere Bremse ausgegeben.

Das Steuerungselement zur Regelung der Antriebsleistung wird bislang herkömmlicherweise vom menschlichen Fahrer bedient.

Beim autonomen Fahren kann dieses aber auch von einer Maschine bedient werden, welche dann in die Rolle des Fahrers schlüpft. Bei besagtem Steuerungselement handelt sich beispielsweise um ein Gaspedal, insbesondere in einem Kraftfahrzeug, oder um einen Fahrhebel oder auch Fahrbremshebel in einem Schienenfahrzeug. Insofern wird weitergebildet die Stellung des Fahrhebels eines Schienenfahrzeugs erfasst. Diese repräsentiert die abgegebene Antriebsleistung. Die momentane Beschleunigung des Fahrzeugs ist darüber hinaus abhängig von weiteren Faktoren, wie beispielsweise dem momentanen Fahrzeuggewicht, was durch Beladung Schwankungen unterliegen kann, oder dem Streckenprofil, also insbesondere einer zu befahrenden Steigung oder eines Gefälles. Darüber hinaus kann durch gesetzliche Vorgaben eine maximale Beschleunigung vorgegeben sein. Das Steuerungselement dient somit zur Regelung der Beschleunigung des Fahrzeugs in einem vorgegebenen Rahmen unter Berücksichtigung weiterer Einflussfaktoren.

Neben der Stellung des Steuerungselement zur Regelung der Antriebsleistung wird die momentane Beschleunigung - wenigstens ein Wert zur Beschleunigung des Fahrzeugs - erfasst. Dies kann einerseits durch entsprechend geeignete und ausgebildete Beschleunigungssensoren geschehen. Andererseits kann die momentane Beschleunigung des Fahrzeugs auch mittelbar ermittelt werden. Dafür kann wenigstens ein Messwert zu einer vorgegebenen Messgröße erfasst werden, welche repräsentativ für die Beschleunigung ist, aus welcher der wenigstens eine Wert der momentanen Beschleunigung ermittelt, beispielsweise errechnet, wird. So wird üblicherweise die Geschwindigkeit des Fahrzeugs überwacht. Aus ihrer zeitlichen Veränderung lässt sich die Beschleunigung leicht errechnen. Auch aus Drehzahlen von Antriebsmotoren oder Rädern lassen sich Geschwindigkeit und Beschleunigung in einfacher Art und Weise ermitteln.

Gemäß einer Ausführungsform der Erfindung umfasst das Fahrzeug wenigstens einen Messwertaufnehmer zur Erfassung einer Drehzahl wenigstens eines Antriebs, insbesondere eines Antriebsmotors, oder wenigstens eines angetriebenen Rads. Werte zu Drehzahlen des Antriebs und/oder des Rads des Fahrzeugs werden über einen vorgegebenen Zeitraum erfasst und aus den erfassten Werten zu den Drehzahlen des Antriebs und/oder des Rads des Fahrzeugs wird der erfasste Beschleunigungswert des Fahrzeugs ermittelt. Dies erfolgt insbesondere durch die Fahrzeugsteuerung. Diese Fahrzeugsteuerung ist dann entsprechend geeignet ausgebildet zur Ermittlung des wenigstens einen Werts zur momentanen Beschleunigung des Fahrzeugs.

Mittels einer geeigneten Vergleichseinrichtung, insbesondere eines Rechners, der Fahrzeugsteuerung wird der erfasste, also unmittelbare gemessene oder mittelbar errechnete, Beschleunigungswert mit einem vorgegebenen Beschleunigungswert verglichen. Es wird somit ein einfacher Soll/Ist-wertvergleich durchgeführt. Weicht der erfasste Istwert der momentanen Beschleunigung zu weit, also um mindestens ein vorgegebenes Maß, vom vorgegebenen Sollwert der Beschleunigung ab, wird auf eine unbekannte Bremskraft geschlossen und dem Fahrzeugführer ein entsprechendes Signal über die erkannte unbekannte Bremskraft ausgegeben. Dies kann optisch über ein Display, beispielsweise durch Anzeige einer Fehlermeldung, oder akustisch über eine Warnglocke oder ähnliches geschehen.

Der vorgegebene Beschleunigungswert wird dabei zumindest in Abhängigkeit der erfassten Stellung des Steuerungselements zur Regelung der Antriebsleistung vorgegeben. Wie oben bereits ausgeführt, kann die Beschleunigung von weiteren Faktoren abhängen.

Eine Weiterbildung der Erfindung sieht vor, dass der vorgegebene Beschleunigungswert zusätzlich zur erfassten Stellung eines Steuerungselements zur Regelung der Antriebsleistung in Abhängigkeit einer vorgegebenen maximalen Beschleunigung für das Fahrzeug vorgegeben wird.

Bei Schienenfahrzeugen des öffentlichen Personenverkehrs sind Grenzwerte für Ruck und Beschleunigung per Gesetz bzw. Verordnung vorgegeben und entsprechend einzuhalten. Daraus ergibt sich die vorgegebene maximale Beschleunigung. Diese ist für viele Fahrzeuge in den meisten realen Fahrsituationen erreichbar. Ein Beispiel: Erreicht eine in einer Steigung anfahrende Straßenbahn bei voller Abrufung der Antriebsleistung den vorgeschriebenen Wert der maximalen Beschleunigung, so kann der Fahrer derselben Straßenbahn den Fahrhebel auf die größtmögliche Antriebsleistung beim Anfahren in einem Gefälle einstellen und dennoch beschleunigt die Straßenbahn nicht über den vorgeschriebenen Wert der maximalen Beschleunigung hinaus. Der vorgegebene Wert der Beschleunigung (Sollwert) ergibt sich somit in Abhängigkeit der Stellung des Steuerungselements (Fahrhebel) zur Regelung der Antriebsleistung sowie in Abhängigkeit des Werts der maximalen Beschleunigung.

Gemäß einer weiteren Weiterbildung der Erfindung wird vorgeschlagen, dass der vorgegebene Beschleunigungswert zusätzlich in Abhängigkeit einer vorgegebenen maximalen Geschwindigkeit für das Fahrzeug vorgegeben wird. Auf sämtlichen Strecken gelten Geschwindigkeitsbegrenzungen. Wird die maximal zulässige Geschwindigkeit erreicht, findet auch bei Stellung des Steuerungselements zur Abrufung der vollen Antriebsleistung keine Beschleunigung mehr statt.

Eine Ausgestaltung der Erfindung sieht die Vorgabe des vorgegebenen Beschleunigungswerts in zusätzlicher Abhängigkeit von einem vorgegebenen Beschleunigungsverlauf vor. Kurz vor Erreichen der zulässigen Höchstgeschwindigkeit wird das Fahrzeug nicht mit der maximalen Beschleunigung beschleunigt, um beim Erreichen der vorgegebenen maximalen Geschwindigkeit die momentane Beschleunigung nicht ruckartig auf Null zu reduzieren. Stattdessen nähert sich die momentane Geschwindigkeit des Fahrzeugs der vorgegebenen maximalen Geschwindigkeit des Fahrzeugs an, bis sie sich erreicht. Bewerkstelligt wird dies auch hier mit einem Zurückfahren der momentanen Beschleunigung auch bei Stellung des Fahrhebels zur Abrufung der vollen Antriebsleistung. Aus dem Abstand zur maximalen Geschwindigkeit ergibt sich in diesem Fall eine vorgegebene Restbeschleunigung aus einem vorgegebenen Beschleunigungsverlauf.

Der Sollwert der momentanen Beschleunigung wird entsprechend in zusätzlicher Abhängigkeit dieses vorgegebenen Beschleunigungsverlaufs vorgegeben.

In einer weiteren Weiterbildung wird der vorgegebene Beschleunigungswert zusätzlich in Abhängigkeit einer zur Verfügung gestellten Antriebsspannung und/oder eines Anteils an zur Verfügung stehenden Antrieben für das Fahrzeug vorgegeben.

Ein Schienenfahrzeug weist meist mehrere Antriebseinheiten und somit mehrere Antriebsmotoren auf. Fällt ein Antriebsmotor aus, steht nicht mehr die gesamte Antriebsleistung zur Verfügung. So könnte auch bei Stellung des Fahrhebels zur Abrufung der vollen Antriebsleistung die maximale Beschleunigung nicht erreicht werden. Die momentane Beschleunigung ist somit abhängig von der Anzahl der zur Verfügung stehenden Antriebseinheiten, was hier Berücksichtigung findet.

Bei batterie- und kondensatorbetriebenen Fahrzeugen kann durch einen Defekt an einer Batterie oder dem Kondensator die Spannung abfallen, was ebenfalls zu einer verminderten Beschleunigung führen kann.

Mit der Erfindung lassen sich viele Formen von unbekannten Bremskräften entdecken, so auch streckenseitige Hindernisse. Bei Fahrzeugen mit ausfallsicherer Federspeicherbremse kann es trotz ausreichendem Hydraulikdruck im Bremssystem, beispielsweise durch eine Leckage oder durch Schmutzpartikel verstopfte Leitungen, vorkommen, dass die Bremse nicht abhebt und sich somit nicht löst. Für den Fahrer ist das nicht unmittelbar ersichtlich. Eine angelegte und damit geschlossene Bremse wird dem Fahrer in der Regel nicht aktiv angezeigt. Einem Bremssteuergerät wird meist nur der anliegende Druck im Betätigungssystem gemeldet und eine Anzeige an den Fahrer erfolgt oft nur bei nicht ausreichendem Druck. Durch längeres Fahren mit geschlossener Bremse kann es jedoch zu großen Schäden am Fahrzeug und/oder der umgebenden Infrastruktur, wie auch der Schiene kommen.

Gemäß der vorgeschlagenen Lösung findet eine aktive Überwachung von unbekannten Bremskräften durch die Fahrzeugsteuerung mittels Analyse des Fahrverhaltens des Fahrzeugs statt.

Dabei ist das Verfahren und damit die zusätzliche Überwachungsfunktion in die bereits vorhandene Fahrzeugsteuerung integriert. Es ist unabhängig von einer Rückmeldung aus der Bremsanlage. Eine Aus- oder Nachrüstung von zusätzlicher Hardware, wie zusätzlichen Sensoren, ist nicht erforderlich. Die erforderlichen Messdaten liegen in der Fahrzeugsteuerung bereits vor.

Somit lässt sich das Verfahren auch leicht in bereits bestehende Systeme implementieren. Es gewährleistet eine zusätzliche Sicherheit.

Ist eine Rückmeldung aus der mechanischen Bremsanlage oder der Bremssteuerung aufgrund eines Fehlers in der Sensorik, einer Undichtigkeit, etc. fehlerhaft und kann damit der Zustand der mechanische Bremse nicht einwandfrei erkannt werden hat dies keine Auswirkung auf die erfindungsgemäße Überwachungsfunktion in Fahrzeugsteuerung, da diese auf die genannten Rückmeldungen nicht angewiesen ist.

Das SOLL-Fahrverhalten des Fahrzeugs wird berechnet. Das IST-Fahrverhalten wird aus bekannten Fahrzeugdaten (z.B. Geschwindigkeitswerten) zurückgelesen. Durch Überwachung der Abweichung zwischen SOLL- und IST- Werte erkennt die Fahrzeugsteuerung das außerordentliche Fahrverhalten.

Eine angelegte Bremse kann somit einfach, sicher und kostengünstig erkannt werden. Ansonsten würde das Fahrzeug gegen die angelegte mechanische Bremse fahren und die Bremsausrüstung dadurch beschädigen.

Wie bereits ausgeführt wird der Wert zur momentanen Beschleunigung des Fahrzeugs weitergebildet frei vom Ort des Fahrzeugs, von Uhrzeit, Fahrplan, Streckenbedingungen, Infrastruktureinrichtungen, Topographie der Strecke oder des umgebenen Geländes erfasst oder ermittelt und der vorgegebene Wert der Beschleunigung des Fahrzeugs wird frei von Ort des Fahrzeugs, Uhrzeit, Fahrplan, Streckenbedingungen, Infrastruktureinrichtungen, Topographie der Strecke oder des umgebenen Geländes vorgegeben.

Ein analog weitergebildetes Fahrzeug ist entsprechend frei von zusätzlichen Messwertaufnehmern bzw. Sensoren zur Erfassung des Orts, der Streckenbedingungen, der Topographie der Strecke etc. Für das erfindungsgemäße Verfahren ist eine Auswertung von Daten zusätzlicher Sensoren nicht erforderlich.

## Patentansprüche

1. Verfahren zum Betreiben eines Fahrzeugs,
umfassend folgende Verfahrensschritte:
- Erfassen eines momentanen Beschleunigungswerts des Fahrzeugs,
- Vergleichen des erfassten Beschleunigungswerts mit einem vorgegebenen Beschleunigungswert,
- Schließen auf eine unbekannte Bremskraft bei Feststellung einer Abweichung des erfassten Beschleunigungswerts vom vorgegebenen Beschleunigungswert um zumindest ein vorgegebenes Maß,
- Ausgeben eines Signals über eine unbekannte Bremskraft an den Fahrer des Fahrzeugs,
**gekennzeichnet durch**:
- Erfassen einer Stellung eines Steuerungselements zur Regelung der Antriebsleistung,
- Vorgeben des vorgegebenen Beschleunigungswerts in Abhängigkeit der erfassten Stellung des Steuerungselements zur Regelung der Antriebsleistung.

2. Verfahren nach Anspruch 1,
**dadurch gekennzeichnet, dass**
das Fahrzeug eine ausfallsichere Bremse aufweist.

3. Verfahren nach Anspruch 2,
**dadurch gekennzeichnet, dass**
bei Feststellung einer Abweichung des erfassten Beschleunigungswerts vom vorgegebenen Beschleunigungswert um zumindest das vorgegebene Maß auf eine angelegte, ausfallsichere Bremse geschlossen wird und dem Fahrer des Fahrzeugs ein Signal über eine angelegte, ausfallsichere Bremse ausgegeben wird.

4. Verfahren nach einem der Ansprüche 1 bis 3,
**dadurch gekennzeichnet, dass**
der vorgegebene Beschleunigungswert zusätzlich in Abhängigkeit einer vorgegebenen maximalen Beschleunigung für das Fahrzeug vorgegeben wird.

5. Verfahren nach einem der Ansprüche 1 bis 4,
**dadurch gekennzeichnet, dass**
der vorgegebene Beschleunigungswert zusätzlich in Abhängigkeit einer vorgegebenen maximalen Geschwindigkeit für das Fahrzeug vorgegeben wird.

6. Verfahren nach einem der Ansprüche 1 bis 5,
**dadurch gekennzeichnet, dass**
der vorgegebene Beschleunigungswert zusätzlich in Abhängigkeit einer zur Verfügung gestellten Antriebsspannung und/oder in Abhängigkeit eines Anteils an der Beschleunigung beteiligten Antrieben des Fahrzeugs vorgegeben wird.

7. Verfahren nach einem der Ansprüche 1 bis 6,
**dadurch gekennzeichnet, dass**
Werte zu Drehzahlen eines Antriebs und/oder von Rädern des Fahrzeugs über einen vorgegebenen Zeitraum erfasst werden und der erfasste Beschleunigungswert aus den erfassten Werten zu den Drehzahlen des Antriebs und/oder der Räder des Fahrzeugs errechnet wird.

8. Verfahren nach einem der Ansprüche 1 bis 7,
**dadurch gekennzeichnet, dass**
der vorgegebene Beschleunigungswert frei von zusätzlichen Messwerten zu Ort des Fahrzeugs, Uhrzeit, Fahrplan, Streckenbedingungen, Infrastruktureinrichtungen, Topographie der Strecke oder des umgebenen Geländes des Fahrzeugs vorgegeben wird.

9. Fahrzeug mit
Messwertaufnehmern zur Erfassung einer Stellung eines Steuerungselements zur Regelung der Antriebsleistung des Fahrzeugs und zur Erfassung eines momentanen Beschleunigungswerts des Fahrzeugs, und mit einer Fahrzeugsteuerung,
**dadurch gekennzeichnet, dass**
die Fahrzeugsteuerung ausgebildet ist
- zur Vorgabe eines Beschleunigungswerts in Abhängigkeit der erfassten Stellung des Steuerungselements zur Regelung der Antriebsleistung, und
- zum Vergleich des erfassten Beschleunigungswerts mit dem vorgegebenen Beschleunigungswert, wobei auf eine unbekannte Bremskraft bei Feststellung einer Abweichung des erfassten Beschleunigungswerts vom vorgegebenen Beschleunigungswert um zumindest ein vorgegebenes Maß geschlossen wird, sowie
- zur Ausgabe eines Signals über eine unbekannte Bremskraft an den Fahrer des Fahrzeugs.

10. Fahrzeug nach Anspruch 9, **dadurch gekennzeichnet, dass** es ein Schienenfahrzeug ist.

## Claims

1. Method for operating a vehicle,
comprising the following method steps:
- sensing a momentary acceleration value of the vehicle,
- comparing the sensed acceleration value with a predefined acceleration value,
- inferring that there is an unknown braking force if it is found that the sensed acceleration value deviates from the predefined acceleration value by at least a predefined amount,
- outputting a signal concerning an unknown braking force to the driver of the vehicle,
**characterized by**:
- sensing a position of a control element for regulating the drive power,
- predefining the predefined acceleration value in accordance with the sensed position of the control element for regulating the drive power.

2. Method according to Claim 1,
**characterized in that**
the vehicle has a failsafe brake.

3. Method according to Claim 2,
**characterized in that**
if it is found that the sensed acceleration value deviates from the predefined acceleration value by at least the predefined amount, it is inferred that there is an applied failsafe brake and a signal concerning an applied failsafe brake is output to the driver of the vehicle.

4. Method according to one of Claims 1 to 3,
**characterized in that**
the predefined acceleration value is additionally predefined in accordance with a predefined maximum acceleration for the vehicle.

5. Method according to one of Claims 1 to 4,
**characterized in that**
the predefined acceleration value is additionally predefined in accordance with a predefined maximum speed for the vehicle.

6. Method according to one of Claims 1 to 5,
**characterized in that**
the predefined acceleration value is additionally predefined in accordance with an available drive voltage and/or in accordance with a proportion of drives of the vehicle involved in the acceleration.

7. Method according to one of Claims 1 to 6,
**characterized in that**
values relating to rotational speeds of a drive and/or of wheels of the vehicle are sensed over a predefined time period and the sensed acceleration value is calculated from the sensed values relating to the rotational speeds of the drive and/or the wheels of the vehicle.

8. Method according to one of Claims 1 to 7,
**characterized in that**
the predetermined acceleration value is free of additional measured values relating to the location of the vehicle, time of day, timetable, track conditions, infrastructural facilities, topography of the route and or the surrounding terrain of the vehicle.

9. Vehicle with
transducers for sensing a position of a control element for regulating the drive power of the vehicle and for sensing a momentary acceleration value of the vehicle and with a vehicle control,
**characterized in that**
the vehicle control is designed
- for predefining an acceleration value in accordance with the sensed position of the control element for regulating the drive power, and
- for comparing the sensed acceleration value with the predefined acceleration value, an unknown braking force being inferred if it is found that the sensed acceleration value deviates from the predefined acceleration value by at least a predefined amount, and
- for outputting a signal concerning an unknown braking force to the driver of the vehicle.

10. Vehicle according to Claim 9, **characterized in that** it is a rail vehicle.

## Revendications

1. Procédé pour faire fonctionner un véhicule,
comprenant les stades de procédé suivant :
- relevé d'une valeur d'accélération instantanée du véhicule,
- comparaison de la valeur d'accélération relevée à une valeur d'accélération donnée à l'avance,
- déduction d'une force de freinage inconnue à la constatation d'un écart entre la valeur d'accélération relevée à la valeur d'accélération donnée à l'avance d'au moins un montant donné à l'avance,
- envoi au conducteur du véhicule d'un signal sur une force de freinage inconnue,
**caractérisé par** :
- relevé d'une position d'un élément de commande pour la régulation de la puissance d'entraînement,
- prescription de la valeur d'accélération donnée à l'avance en fonction de la position relevée de l'élément de commande pour la régulation de la puissance d'entraînement.

2. Procédé suivant la revendication 1,
**caractérisé en ce que**
le véhicule a un frein sécurisé à une défaillance.

3. Procédé suivant la revendication 2,
**caractérisé en ce qu'**
à la constatation d'un écart entre la valeur d'accélération relevée à la valeur d'accélération donnée à l'avance d'au moins le montant donné à l'avance, on déduit le serrage d'un frein sécurisé à la défaillance et on envoie au conducteur du véhicule un signal sur le serrage d'un frein sécurisé à la défaillance.

4. Procédé suivant l'une des revendications 1 à 3,
**caractérisé en ce que**
l'on prescrit la valeur d'accélération donnée à l'avance en outre en fonction d'une accélération maximum donnée à l'avance du véhicule.

5. Procédé suivant l'une des revendications 1 à 4,
**caractérisé en ce que**
l'on prescrit la valeur d'accélération donnée à l'avance en outre en fonction d'une vitesse maximum donnée à l'avance du véhicule.

6. Procédé suivant l'une des revendications 1 à 5,
**caractérisé en ce que**
l'on prescrit la valeur d'accélération donnée à l'avance en outre en fonction d'une tension d'entraînement mise à disposition et/ou en fonction d'une proportion de l'entraînement du véhicule participant à l'accélération.

7. Procédé suivant l'une des revendications 1 à 6,
**caractérisé en ce que**
l'on relève des valeurs de vitesse de rotation de l'entraînement et/ou de roues du véhicule pendant un laps de temps donné à l'avance et on calcule la valeur de l'accélération relevée à partir des valeurs relevées des vitesses de rotation de l'entraînement et/ou des roues du véhicule.

8. Procédé suivant l'une des revendications 1 à 7,
**caractérisé en ce que**
l'on prescrit la valeur d'accélération donnée à l'avance, sans valeur de mesure supplémentaire se rapportant à l'emplacement du véhicule, l'heure, le plan de circulation, les conditions de voie, les dispositifs d'infrastructure, une topographie des voies ou du terrain entourant le véhicule.

9. Véhicule comprenant
des capteurs de valeur de mesure pour le relevé d'une position d'un élément de commande pour la régulation de la puissance d'entraînement du véhicule et pour le relevé d'une valeur d'accélération instantanée du véhicule et comprenant une commande de véhicule,
**caractérisé en ce que**
la commande du véhicule est constituée
- pour la prescription d'une valeur d'accélération en fonction de la position relevée de l'élément de commande pour la régulation de la puissance d'entraînement, et
- pour la comparaison de la valeur d'accélération relevée à la valeur d'accélération donnée à l'avance, dans lequel on déduit une force de freinage inconnue à la constatation d'un écart entre la valeur d'accélération relevée à la valeur d'accélération donnée à l'avance d'au moins un montant donné à l'avance, ainsi que
- pour l'envoi au conducteur du véhicule d'un signal sur une force de freinage inconnue.

10. Véhicule suivant la revendication 9,
**caractérisé en ce que**
c'est un véhicule ferroviaire.
